(19) Europäisches Patentamt
European Patent Office
Office européen des brevets

(11) **EP 4 554 100 A1**

(12) **EUROPEAN PATENT APPLICATION**
published in accordance with Art. 153(4) EPC

(43) Date of publication:
**14.05.2025 Bulletin 2025/20**

(21) Application number: **23801656.2**

(22) Date of filing: **27.09.2023**

(51) International Patent Classification (IPC):
**H04B 1/59** *(2006.01)*     **B61L 1/02** *(2006.01)*

(86) International application number:
**PCT/CN2023/122173**

(87) International publication number:
**WO 2025/060131 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.09.2023 CN 202311225857**

(71) Applicant: **CRSC RESEARCH & DESIGN INSTITUTE GROUP CO., LTD.**
**Fengtai District**
**Beijing**
**100070 (CN)**

(72) Inventors:
• **XU, Yanwen**
**Fengtai District**
**Beijing 100070 (CN)**
• **SUN, Guoying**
**Fengtai District**
**Beijing 100070 (CN)**

• **YE, Feng**
**Fengtai District**
**Beijing 100070 (CN)**
• **WANG, Mingxi**
**Fengtai District**
**Beijing 100070 (CN)**
• **ZHANG, Fusong**
**Fengtai District**
**Beijing 100070 (CN)**
• **LIU, Zhenhua**
**Fengtai District**
**Beijing 100070 (CN)**
• **REN, Wei**
**Fengtai District**
**Beijing 100070 (CN)**

(74) Representative: **Meissner Bolte Partnerschaft mbB**
**Patentanwälte Rechtsanwälte**
**Postfach 86 06 24**
**81633 München (DE)**

(54) **INDUSI TRACK BALISE APPARATUS**

(57) The present invention relates to an Indusi-Balise device. The Indusi-Balise device includes a Balise main body (1), the Balise main body (1) includes a tuning module and a winding inductor (13), the tuning module includes a plurality of signal compensation resistors having different frequencies and configured to attenuate signal intensity, and a tuning capacitor PCB (15) configured to be matched with the winding inductor (13) to form an LC (Inductor-Capacitor) resonance circuit having a specific frequency; and a looseness early-warning device configured to detect whether the Balise main body (1) is loosened or not is disposed on the Balise main body (1). The present invention can realize ground equipment of a complete Indusi system, can adapt to PZB vehicle-mounted equipment having resonance frequencies of 500 Hz, 1000 Hz and 2000 Hz, and also has an ability to detect whether a Balise is loosened or detached from a steel rail (2) or not, so as to alarm maintenance personnel in an environment of train running for a long time.

FIG.1

Description

## TECHNICAL FIELD

The present invention belongs to the technical field of rail equipment, and particularly relates to an Indusi-Balise device

## BACKGROUND

An Indusi system (intermittent train control system) includes Indusi vehicle-mounted host equipment, an Indusi vehicle-mounted antenna (hereinafter referred to as LGP), and Indusi wayside equipment. The intermittent train control system, through the collection of the vehicle-mounted antenna and a speed transmission, performs monitoring and overspeed protection on the running speed of a train after passing through the designated point of a line (mounted with rail magnetic steel) and the maximum allowable speed beyond the designated point according to the type of the train.

The application interface of the current product needs to comply with the PZB technical specification published by Germany. The system cannot realize the ground equipment of the complete Indusi system, and cannot simultaneously adapt to the PZB vehicle-mounted equipment having the resonance frequencies of 500 Hz, 1000 Hz and 2000 Hz. Moreover, the Indusi-Balise is mounted on the steel rail, and is likely to loosen or even fall off in vibration, so it is impossible to know the mounting status of the Indusi-Balise.

## SUMMARY

The present invention aims to provide an Indusi-Balise device for solving the above problem.

The present invention realizes the above aim through the following technical solution.

The Indusi-Balise device includes a Balise main body, the Balise main body includes a tuning module and a winding inductor, where the tuning module includes a plurality of signal compensation resistors having different frequencies and configured to attenuate signal intensity, and a tuning capacitor PCB configured to be matched with the winding inductor to form an LC resonance circuit having a specific frequency; and

a looseness early-warning device configured to detect whether the Balise main body is loosened or not is disposed on the Balise main body.

As a further optimization solution of the present invention, the plurality of signal compensation resistors having different frequencies include a 500 Hz signal compensation resistor, a 1000 Hz signal compensation resistor, and a 2000 Hz signal compensation resistor, which have a 500 Hz resonance function, a 1000 Hz resonance function and a 2000 Hz resonance function with a PZB vehicle-mounted antenna, respectively.

As a further optimization solution of the present invention, the winding inductor includes a magnetic rod and a winding, where the winding is a non-metallic molding part, is sleeved on the magnetic rod, and is externally wound with an enameled wire.

As a further optimization solution of the present invention, the looseness early-warning device includes a vibration sensor, a CPU and acquisition circuit, a signal isolation circuit configured to isolate signals, and a storage battery configured to supply power;

the vibration sensor is configured to acquire a vibration signal, convert the vibration signal into a voltage signal and transmit the voltage signal to the CPU and acquisition circuit; and
the CPU and acquisition circuit is configured to judge based on the voltage signal, obtain a judgment result and output the judgment result to the signal isolation circuit according to high and low levels.

As a further optimization solution of the present invention, the CPU and acquisition circuit includes an A/D acquisition module, a filtering module, an FFT frequency domain calculation module, an FFT result complex modulo calculation module, an energy calculation module, and a threshold determination module;

the A/D acquisition module is configured to sample signals in a preset frequency range;
the filtering module is configured to filter an interference frequency except a vibration characteristic frequency of a steel rail;
the FFT frequency domain calculation module is configured to perform FFT Fourier transform calculation on the filtered data and then output the complex component of each frequency point from 0 Hz to a sampling rate by adopting a formula as follows:

$$Z(n) = X(n) + j \cdot Y(n);$$

where n represents a frequency point serial number, Z(n) represents a signal component at a frequency point, X(n) represents a real part in the signal component at the frequency point, and Y(n) represents an imaginary part in the signal component at the frequency point;

the FFT result complex modulo calculation module is configured to perform modulo calculation on the output result of the FFT frequency domain calculation module by adopting a formula as follows:

$$|Z(\mathbf{n})| = \sqrt{X(\mathbf{n})^2 + Y(\mathbf{n})^2} \; ;$$

the energy calculation module is configured to calculate an average value and a maximum value of point moduli of moduli outputted by the FFT result complex modulo calculation module in a frequency range of steel rail vibration; and
the threshold determination module is configured to determine whether the Balise main body is loosened or not based on the average value and the maximum value.

As a further optimization solution of the present invention, the threshold determination module is configured to determine whether the Balise main body is loosened or not based on the average value and the maximum value as follows:

setting an average value threshold and a peak valve threshold;
determining whether the average value of the moduli is greater than the average value threshold or not;
determining whether the maximum value of the moduli is greater than the peak value threshold or not;
counting whether the number of points in the frequency range of steel rail vibration, the moduli of which are greater than the average value threshold, is greater than 1/20 of the total number of points in the frequency range of the steel rail vibration; and
if the first three conditions are met within one consecutive second, considering that the received vibration signal is normal, that is, judging that the Balise main body is not mounted loosely; otherwise, judging that the Balise main body is mounted loosely.

As a further optimization solution of the present invention, the Balise main body includes a main shell, a support is disposed on the main shell, a bottom mounting rack is disposed on the support, and the bottom mounting rack is mounted on the steel rail; and both sides of the Balise main body are provided with protection plates, and the protection plates are mounted on the steel rail.

As a further optimization solution of the present invention, the Balise main body is respectively provided with a main cavity configured to place the magnetic rod, a first side cavity configured to place the tuning capacitor PCB, a binding post configured to mount a power cable, and a second side cavity for testing; and the main cavity and the first side cavity are encapsulated by a pouring sealant.

As a further optimized solution of the present invention, the device also includes a cable assembly and a relay of a signal switching device, where the cable assembly includes a cable protection piece, cables, and a junction box which are mounted on the Balise main body, and the junction box is configured to connect the cable assembly between the relay of the signal switching device of a section signal and the Balise main body, that is, the cable outputted from the Balise main body and the cable outputted from the relay of the signal switching device are electrically connected in the junction box.

As a further optimization solution of the present invention, the relay of the signal switching device is connected with a switching signal of an external interlocking controller, the switching signal of the interlocking controller controls a signal lamp and simultaneously controls the validity and invalidity of the Balise main body, and a closed signal contact makes the Balise main body invalid, or controls the resonance frequency to be 1000 Hz or 2000 Hz.

The present invention has the beneficial effects that:
The present invention can realize ground equipment of a complete Indusi system, can adapt to PZB vehicle-mounted equipment having resonance frequencies of 500 Hz, 1000 Hz and 2000 Hz, and also has an ability to detect whether a Balise is loosened or detached from the steel rail or not, so as to alarm maintenance personnel in an environment of train running for a long time.

**BRIEF DESCRIPTION OF THE DRAWINGS**

FIG 1 is a schematic diagram of an overall structure of the present invention;

FIG2 is a schematic structural diagram of a Balise main body of the present invention;

FIG3 is a top view of a Balise main body of the present invention;

FIG4 is a front view of a Balise main body of the present invention;

FIG5 is a structural block diagram of a looseness early-warning device of the present invention; and

FIG6 is a structural block diagram of a CPU and acquisition circuit of the present invention.

Reference numerals: 1, Balise main body; 2, steel rail; 3, cable protection piece; 4, antenna support ; 5, bottom mounting rack; 6, protection plate; 7, junction box; 8, cable; 9, relay of signal switching device; 10, upper cover; 11, first sealing strip; 12, main shell; 1201, main cavity; 1202, first side cavity; 1203, second side cavity; 13, winding inductor; 14, pouring sealant injection port; 15, tuning capacitor PCB; 16, exhaust hole; 17, side testing cover; 18, nameplate; 19, grounding screw; 20, second sealing strip; 21, side cover; 2101, mounting hole; 2102, testing window; 22, third sealing strip.

## DETAILED DESCRIPTION OF THE EMBODIMENTS

The present application is further described in detail below with reference to the accompanying drawings. It is necessary to point out here that the following detailed embodiments are only used for further description of the present application, and cannot be understood as limiting the scope of protection of the present application. Those skilled in the art can make some non-essential improvements and adjustments to the present application according to the above content of the application.

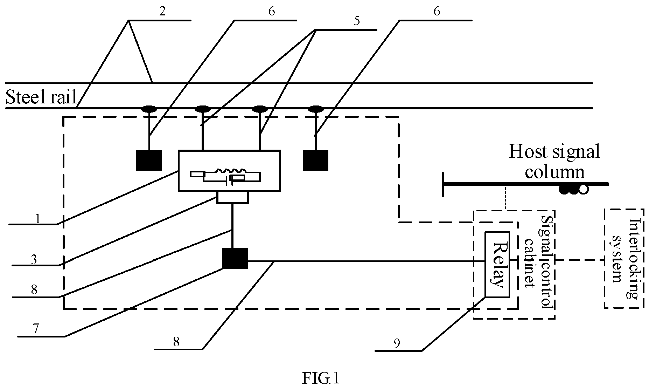

As shown in FIG 1, an Indusi-Balise device includes an Indusi-Balise main body 1, a mounting assembly, a cable assembly, and a relay 9 of a signal switching device.

The principle of the Indusi-Balise main body 1 circuit is a passive LC series structure, the Indusi-Balise main body structurally includes a tuning module and a winding inductor 13, where the tuning module includes a 500 Hz signal compensation resistor, a 1000 Hz signal compensation ,a 2000 Hz signal compensation resistor, and a tuning capacitor PCB 15, and the tuning capacitor is configured to be matched with the inductance of the winding to form a resonant circuit having a specific frequency, the resistors are configured to attenuate signal intensity, and the winding inductor is an inductive component of the LC resonant circuit. In addition, a looseness early-warning device configured to detect whether the Balise main body 1 is loosened or not is included in the Indusi-Balise.

The Indusi-Balise device includes an Indusi-Balise, a cable assembly, a mounting assembly, and a relay of a signal switching device; and the Indusi-Balise includes a tuning module and a winding inductor in terms of a circuit structure. A looseness early-warning device is configured to detect whether the Balise main body 1 is loosened or not is disposed on the Balise main body 1.

In the present embodiment, the Indusi-Balise:

The Indusi-Balise includes PM1020 Balise equipment and PM500 Balise equipment. The PM1020 Indusi-Balise equipment has a 1000 Hz resonance function and a 2000 Hz resonance function with the PZB vehicle-mounted antenna, and is compatible with the switching between circuits of 1000 Hz and 2000 Hz; and the PM500 Indusi-Balise equipment has a 500 Hz resonance function with the PZB vehicle-mounted antenna.

The principle of the Indusi-Balise circuit is a passive LC series structure, the Indusi-Balise main body structurally includes a tuning module and a winding inductor, where the tuning module includes a 500 Hz signal compensation resistor, a 1000 Hz signal compensation resistor, a 2000 Hz signal compensation resistor, and a tuning capacitor PCB, the tuning capacitor is configured to be matched with the inductance of the winding to form a resonant circuit having a specific frequency, the resistors are configured to attenuate signal intensity, and the winding inductor 13 is an inductive component of the LC resonant circuit.

To ensure the mounting height and the current variation during the train-ground induction, it is necessary to control the mutual inductance of the train-ground winding. Under the condition that the required train-ground mutual inductance distance is not greater than the 17.5 cm, the inductance in the shell is not less than 121 mH. The schematic diagram of the inductor is as follows: the inductor includes a magnetic rod and a winding. The winding is a non-metallic molding part, is sleeved on the magnetic rod, and is externally wound with an enameled wire.

The size of the magnetic rod is $\Phi$50 * 480.

The magnetic rod is made of manganese-zinc ferrite PC40 or other magnetic material suitable for 2000 Hz characteristics.

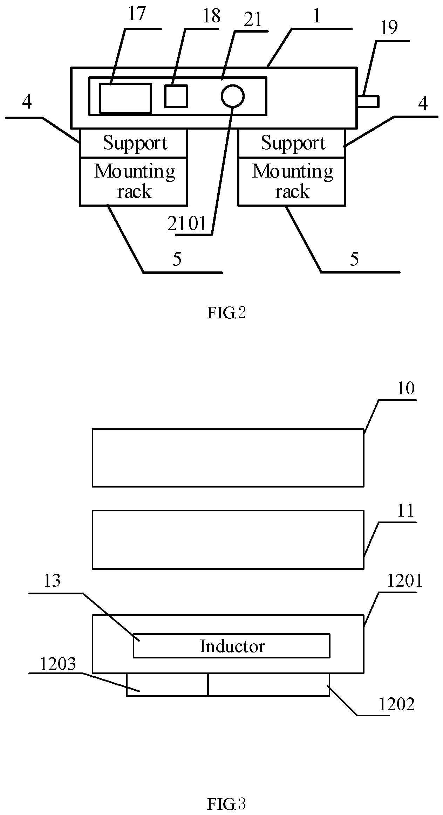

As shown in FIG. 2, the design size of Indusi-Balise is (W * L * H) 220 mm * 710 mm * 120 mm or close to this size. During mounting, the cable protection piece 3 is mounted on the bottom mounting rack 5 to protect the cable from being trampled by an external force. The Balise main body 1 is provided with left and right antenna supports 4, and the two antenna supports 4 are mounted on two bottom mounting racks 5. The bottom mounting racks 5 are mounted on the steel rail 2. Two protection plates 6 are mounted on the steel rail, and may protect the Indusi-Balise main body 1, which has a nameplate 18 outside, from the impact of splashing gravels or other objects during the train running.

As shown in FIG 3, the Indusi-Balise is divided into three cavities and four hermetically designed ports. The three cavities are respectively a main cavity 1201 for placing the magnetic rod, a first side cavity 1202 for placing the PCB 15, a binding post for mounting the power cable, and a second side cavity 1203 for testing.

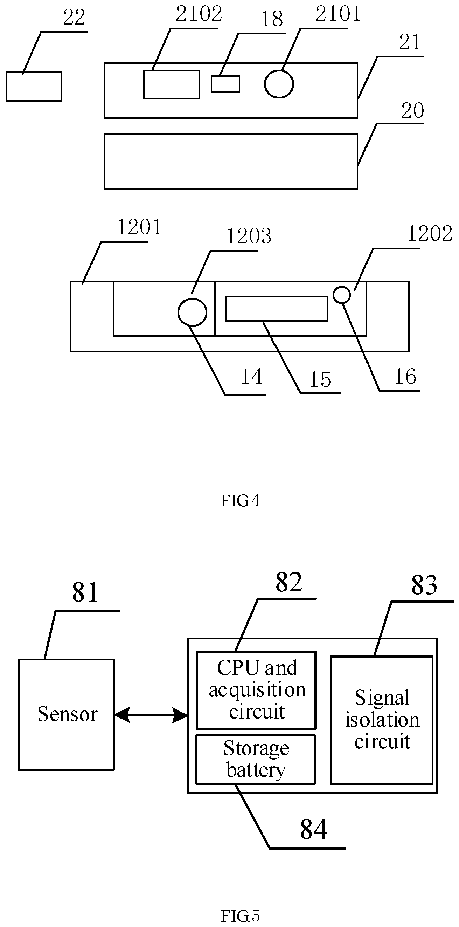

As shown in FIG 4, the main cavity 1201 and the first side cavity 1202 are encapsulated by the pouring sealant, the upper cover 10 is overlapped with the first sealing strip 11 and is connected with the main shell 12 by screws to form the main cavity 1201 of a closed space, a pouring sealant injection port 14 is reserved in a testing cavity on the side of the main cavity, the sealant is injected through the injection port for pouring, and during the encapsulation, air inside the cavity is exhausted through an exhaust hole 16 in the side of the antenna.

The first sealing strip 11 is provided between the upper cover 10 and the main shell 12, a rubber strip is placed in a groove in the edge of the main shell, the SMC (Sheet Molding Compound) upper cover 10 is tightened by a screw, so that the gap between the upper cover 10 and the main shell 12 is squeezed to be in tight contact, and meanwhile, polystyrene foam is arranged in the SMC upper cover 10, so that the main cavity achieves the sealing effect of the level of IP67 and above; and the side testing cover 17 is fixed to the testing window 2102 on the side cover 21 by being overlapped with the third sealing strip 22, so that the testing window is sealed to achieve the level of IP67 and above.

A tail cable is mounted and fixed on a mounting hole 2101 of the side cover 21 by adopting a metal waterproof cable gland conforming to the level of IP68, the side cover 21 is fixed on the main shell 12 by being overlapped with the second sealing strip 20, and the sealing effect meets the level of IP 67. In addition, a waterproof rubber sheath (cable protection sleeve) with a wall thickness of 2 mm and a diameter of 30 mm is sleeved outside the power cable, the tail cable protection sleeve is fixed on the cable gland by a metal hoop, and the cable protection sleeve and the tail cable are fixed by another metal hoop; the cable protection piece 3 is mounted on the mounting rack 5, so that the tail cable will not be exposed to ballasts, sunlight and rain.

The main shell 12 is made of metal aluminum, based on the consideration of the influence of the magnetic field intensity; and the magnetic field principle of the product has the minimum influence on the aluminum material. The upper cover 10 is made of non-metal (the upper cover made of metal may not be used as required by the magnetic induction function of the vehicle-mounted antenna), and the upper cover 10 is made of SMC. A grounding screw 19 is reserved outside the main shell 12.

Mounting assembly:

The mounting assembly includes a mounting rack and an Indusi-Balise protection rack 6, the mounting rack is fixed at the root of the steel rail, and the Indusi-Balise is mounted on the mounting rack 5; the protection rack is mounted at the front end and the rear end of the Indusi-Balise on the side of the steel rail, and may protect the Indusi-Balise from the impact of splashing gravels or other objects during the train running.

Relay of signal switching device:

The relay 9 of the signal switching device is connected with a switching signal of an external interlocking controller, the switching signal of the interlocking controller controls a signal lamp and simultaneously controls the validity and invalidity of the Indusi-Balise, and a closed signal contact makes the Indusi-Balise invalid, or controls the PM1020 Balise to have a 1000 Hz resonance frequency or a 2000 Hz frequency.

The three groups of nodes of the relay 9 of the signal switching device are configured to access the PM1020 Balise and the PM500 Balise, and the relay has a control node that is recovered by the interlocking equipment.

Table 1 Truth table for controlling Indusi-Balise resonance frequency

| Serial number | Indusi-Balise | | | Control relay status | | |
|---|---|---|---|---|---|---|
| | 500 Hz | 1000 Hz | 2000 Hz | R3 | R2 | R1 |
| 1 | √ | × | √ | Down | Down | Down |
| 2 | × | × | × | Up | - | Up |
| 3 | × | √ | × | Up | Up | Down |
| 4 | √ | √ | × | Down | Up | Down |

Cable assembly:

The cable assembly includes a four-core cable 8 and a junction box 7, where the junction box 7 has a cable connection function and a waterproof and dustproof function. The junction box 7 is configured to connect the cable assembly between the relay 9 of the signal switching device of the section signal and the Balise main body 1, that is, the cable 8 that outputted from the Balise main body 1 is connected to the junction box 7, and the cable 8 outputted from the relay 9 of the signal switching device is connected to the junction box 7, and the cables 8 are electrically connected in the junction box 7.

Looseness early-warning device:

The Balise main body 1 is mounted at the bottom of the steel rail through the mounting rack. When a train runs on the steel rail, the vibration of the steel rail is transmitted to the Balise through the mounting rack. The vibration sensor 81 in the Balise converts the vibration signal into a voltage signal and transmits the voltage signal to the CPU and acquisition circuit 82. The CPU has an AD analog signal converted into a digital signal, that is, the voltage signal. The CPU collects the voltage signal after vibration and performs the algorithm processing of converting a time domain signal to a frequency domain signal. The frequency domain data can reflect the energy intensity of signals with different frequency characteristics, and the running characteristic frequency of the train on the steel rail is a signal in a small range of frequency band, so that the CPU intercepts the data in the frequency range, and calculates the sum of root mean squares to obtain an energy signal, and when the energy signal is determined to be continuously greater than a numerical value for a period of time, the Balise is judged not to be loosened or detached from the steel rail, a high-level signal is outputted to a relay signal box to drives a state relay.

The storage battery 84 supplies power to the CPU and acquisition circuit 82 and simultaneously supplies power to the vibration sensor 81, and the storage battery 84 may be replaced more than once a year because the CPU and acquisition circuit 82 adopts a low-power consumption CPU and the circuit of the vibration sensor 81 has extremely low energy consumption.

As shown in FIG. 5, the main components with this function include the vibration sensor 81, the CPU and acquisition circuit 82, the signal isolation circuit 83, and the storage battery 84.

The vibration sensor 81 is a vibration sensor mounted in the Balise, and may convert a vibration signal into a voltage signal. The storage battery 84 provides a voltage, and the converted voltage signal is transmitted to the CPU and acquisition circuit 82.

The CPU and acquisition circuit 82 has a function of converting an analog voltage signal into digital information data and a function of AD conversion, and the CPU has a function of controlling AD acquisition signals and data processing, and judges whether the Balise is mounted perfectly or not according to the processing result of the vibration signal. The judgment result is outputted to the signal isolation circuit 83 according to the high and low levels.

The signal isolation circuit 83 is supplied with power by the storage battery, and an optical coupler or a relay device completes an isolation function. The input signal is a switching signal outputted by the CPU and acquisition circuit 82, and the output side is provided by an external power supply line.

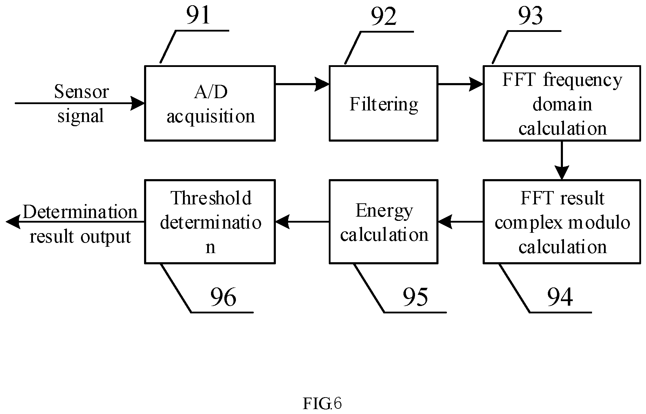

As shown in FIG 6, the CPU of the CPU and acquisition circuit 82 completes data processing therein, and mainly includes an A/D acquisition module 91, a filtering module 92, an FFT frequency domain calculation module 93, an FFT result complex modulo calculation module 94, an energy calculation module 95, and a threshold determination module 96 in the following logic block diagram.

The A/D acquisition module 91 controls the sampling rate to be about 10 kz for signal sampling.

The filtering module 92 sets a filter as an IIR (Infinite Impulse Response) band-pass filter, and the frequency of the filter is the same as the sampling frequency controlled by the A/D acquisition module 91. The cut-off frequency of the filter is set as the frequency range K1-K2 of the steel rail vibration when the train is running, and the interference frequency except the vibration characteristic frequency of the steel rail is filtered.

The FFT frequency domain calculation module 93 performs FFT Fourier transform calculation on band-pass filtered data and then outputs the complex component of each frequency point from 0 Hz to a sampling rate by adopting a formula as follows:

$$Z(n) = X(n) + j \cdot Y(n);$$

where n represents a frequency point serial number, Z(n) represents a signal component at a frequency point, X(n) represents a real part in the signal component at the frequency point, and Y(n) represents an imaginary part in the signal component at the frequency point; and

the FFT result complex modulo calculation module 94 is configured to perform modulo calculation on an output result Z(n) = X(n) + j·Y(n) of the FFT frequency domain calculation module 93 by adopting a formula as follows:

$$|Z(\mathbf{n})| = \sqrt{X(\mathbf{n})^2 + Y(\mathbf{n})^2}$$

The energy calculation module 95 is configured to calculate an average value and a maximum value of point moduli of moduli outputted by the FFT result complex modulo calculation module 94 within a frequency band K1 to K2.

The threshold determination module 96 determines that the average value of the moduli is greater than the average value threshold A in the first step; determines that the maximum value is greater than the peak value threshold B in the second step; counts the number C of the points in the K1-K2, the moduli of which are greater than the average value threshold A, to be greater than 1/20 of the total number of the points in the K1-K2 in the third step; and determines that if the first three conditions are met within one consecutive second, the received vibration signal is considered to be normal, that is, the Balise is judged to be completely mounted on the steel rail without being mounted loosely in the fourth step.

The above embodiments only show several embodiments of the present invention, and the description thereof is more specific and detailed, but it should not be understood as limiting the patent scope of the present invention. It should be noted that those of ordinary skill in the art may make various modifications and improvements without departing from the concept of the present invention, which fall within the scope of protection of the present invention.

## Claims

1. An Indusi-Balise device, comprising a Balise main body (1), the Balise main body (1) comprising a tuning module and a winding inductor (13), wherein the tuning module comprises a plurality of signal compensation resistors having different frequencies and configured to attenuate signal intensity, and a tuning capacitor PCB (15) configured to be matched with the winding inductor (13) to form an LC resonance circuit having a specific frequency; and
a looseness early-warning device is configured to detect whether the Balise main body (1) is loosened or not is disposed on the Balise main body (1).

2. The Indusi-Balise device according to claim 1, **characterized in that**, the plurality of signal compensation resistors having different frequencies comprise a 500 Hz signal compensation resistor, a 1000 Hz signal compensation resistor, and a 2000 Hz signal compensation resistor, which have a 500 Hz resonance function, a 1000 Hz resonance function and a 2000 Hz resonance function with a PZB vehicle-mounted antenna, respectively.

3. The Indusi-Balise device according to claim 1, **characterized in that**, the winding inductor (13) comprises a magnetic rod and a winding, wherein the winding is a non-metallic molding part, is sleeved on the magnetic rod, and is externally wound with an enameled wire.

4. The Indusi-Balise device according to claim 1, **characterized in that**, the looseness early-warning device comprises a vibration sensor (81), a CPU and acquisition circuit (82), a signal isolation circuit (83) configured to isolate signals, and a storage battery (84) configured to supply power;

the vibration sensor (81) is configured to acquire a vibration signal, convert the vibration signal into a voltage signal and transmit the voltage signal to the CPU and acquisition circuit (82); and
the CPU and acquisition circuit (82) is configured to judge based on the voltage signal, obtain a judgment result and output the judgment result to the signal isolation circuit (83) according to high and low levels.

5. The Indusi-Balise device according to claim 4, **characterized in that**, the CPU and acquisition circuit (82) comprises an A/D acquisition module (91), a filtering module (92), an FFT frequency domain calculation module (93), an FFT result complex modulo calculation module (94), an energy calculation module (95), and a threshold determination module (96);

the A/D acquisition module (91) is configured to sample signals in a preset frequency range;
the filtering module (92) is configured to filter an interference frequency except a vibration characteristic frequency of a steel rail;
the FFT frequency domain calculation module (93) is configured to perform FFT Fourier transform calculation on the filtered data and then output a complex component of each frequency point from 0 Hz to a sampling rate by adopting a formula as follows:

$$Z(n) = X(n) + j \cdot Y(n);$$

wherein n represents a frequency point serial number, Z(n) represents a signal component at a frequency point, X(n) represents a real part in the signal component at the frequency point, and Y(n) represents an imaginary part in the signal component at the frequency point;

the FFT result complex modulo calculation module (94) is configured to perform modulo calculation on the output result of the FFT frequency domain calculation module (93) by adopting a formula as follows:

$$| Z(\mathbf{n}) | = \sqrt{X(\mathbf{n})^2 + Y(\mathbf{n})^2} \; ;$$

the energy calculation module (95) is configured to calculate an average value and a maximum value of point moduli of moduli outputted by the FFT result complex modulo calculation module (94) in a frequency range of steel rail vibration; and

the threshold determination module (96) is configured to determine whether the Balise main body (1) is loosened or not based on the average value and the maximum value.

6. The Indusi-Balise device according to claim 5, **characterized in that**, the threshold determination module (96) is configured to determine whether the Balise main body (1) is loosened or not based on the average value and the maximum value as follows:

setting an average value threshold and a peak value threshold;
determining whether the average value of the moduli is greater than the average value threshold or not;
determining whether the maximum value of the moduli is greater than the peak value threshold or not;
counting whether the number of points in a frequency range of steel rail vibration, the moduli of which are greater than the average value threshold, is greater than 1/20 of the total number of points in the frequency range of the steel rail vibration; and
if the first three conditions are met within one consecutive second, considering that the received vibration signal is normal, that is, judging that the Balise main body (1) is not mounted loosely; otherwise, judging that the Balise main body (1) is mounted loosely.

7. The Indusi-Balise device according to claim 1, **characterized in that**, the Balise main body (1) comprises a main shell (12), a support (4) is disposed on the main shell (12), a bottom mounting rack (5) is disposed on the support (4), and the bottom mounting rack (5) is mounted on the steel rail (2); and both sides of the Balise main body (1) are provided with protection plates (6), and the protection plates (6) are mounted on the steel rail (2).

8. The Indusi-Balise device according to claim 7, **characterized in that**, the Balise main body (1) is respectively provided with a main cavity (1201) configured to place the magnetic rod, a first side cavity (1202) configured to place the tuning capacitor PCB (15), a binding post configured to mount a power cable, and a second side cavity (1203) for testing; and the main cavity (1201) and the first side cavity (1202) are encapsulated by a pouring sealant.

9. The Indusi-Balise device according to claim 1, further comprising a cable assembly and a relay (9) of a signal switching device, wherein the cable assembly comprises a cable protection piece (3), cables (8), and a junction box (7) which are mounted on the Balise main body (1), the junction box (7) is configured to connect the cable assembly between the relay (9) of the signal switching device of a section signal and the Balise main body (1), that is, the cable (8) outputted from the Balise main body (1) and the cable (8) outputted from the relay (9) of the signal switching device are electrically connected in the junction box (7).

10. The Indusi-Balise device according to claim 9, **characterized in that**, the relay (9) of the signal switching device is connected with a switching signal of an external interlocking controller, the switching signal of the interlocking controller controls a signal lamp and simultaneously controls validity and invalidity of the Balise main body (1), and a closed signal contact makes the Balise main body (1) invalid, or controls the resonance frequency to be 1000 Hz or 2000 Hz.

FIG.1

17  18  21  1  19

4  4

Support  Support

Mounting rack  Mounting rack

2101

5  5

FIG.2

10

11

13  1201

Inductor

1203  1202

FIG.3

22  2102  18  2101  21

20

1201  1203  1202

14  15  16

FIG.4

81  82  83

Sensor

CPU and
acquisition
circuit

Signal
isolation
circuit

Storage
battery

84

FIG.5

91

92

93

Sensor
signal → | A/D
acquisition | → | Filtering | → | FFT frequency
domain
calculation |

| FFT frequency
domain
calculation | ↓ | FFT result
complex modulo
calculation |

Determination
result output ← | Threshold
determination | ← | Energy
calculation | ← | FFT result
complex modulo
calculation |

96

95

94

FIG.6

| | | |
|---|---|---|
| **INTERNATIONAL SEARCH REPORT** | International application No. | |
| | **PCT/CN2023/122173** | |

**A. CLASSIFICATION OF SUBJECT MATTER**

H04B1/59(2006.01)i;  B61L1/02(2006.01)i

According to International Patent Classification (IPC) or to both national classification and IPC

**B. FIELDS SEARCHED**

Minimum documentation searched (classification system followed by classification symbols)

IPC: H04B B61L G01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: indusi, 轨道, 铁路, 点式, 应答器, 震动, 震动, 松动, 脱落, rail, point mode, transponder, vibrate, loosen, separate

**C. DOCUMENTS CONSIDERED TO BE RELEVANT**

| Category* | Citation of document, with indication, where appropriate, of the relevant passages | Relevant to claim No. |
|---|---|---|
| Y | CN 201577087 U (INVENGO INFORMATION TECHNOLOGY CO., LTD.) 08 September 2010 (2010-09-08) description, paragraphs 2 and 24-34 | 1-4, 7-10 |
| Y | CN 108168811 A (UNIVERSITY OF ELECTRONIC SCIENCE AND TECHNOLOGY OF CHINA) 15 June 2018 (2018-06-15) description, paragraphs 44-66 | 1-4, 7-10 |
| A | CN 208508933 U (HENAN LANXIN TECHNOLOGY CO., LTD.) 15 February 2019 (2019-02-15) entire document | 1-10 |
| A | EP 2868548 A1 (THALES DEUTSCHLAND GMBH) 06 May 2015 (2015-05-06) entire document | 1-10 |
| A | EP 4079594 A1 (SCHEIDT & BACHMANN GMBH) 26 October 2022 (2022-10-26) entire document | 1-10 |

☐ Further documents are listed in the continuation of Box C.    ☑ See patent family annex.

| | | |
|---|---|---|
| * Special categories of cited documents: | "T" later document published after the international filing date or priority date and not in conflict with the application but cited to understand the principle or theory underlying the invention | |
| "A" document defining the general state of the art which is not considered to be of particular relevance | | |
| "D" document cited by the applicant in the international application | "X" document of particular relevance; the claimed invention cannot be considered novel or cannot be considered to involve an inventive step when the document is taken alone | |
| "E" earlier application or patent but published on or after the international filing date | | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art | |
| "O" document referring to an oral disclosure, use, exhibition or other means | | |
| "P" document published prior to the international filing date but later than the priority date claimed | "&" document member of the same patent family | |

| Date of the actual completion of the international search | Date of mailing of the international search report |
|---|---|
| **26 May 2024** | **05 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/122173**

| Patent document cited in search report | | | Publication date (day/month/year) | Patent family member(s) | | | Publication date (day/month/year) |
|---|---|---|---|---|---|---|---|
| CN | 201577087 | U | 08 September 2010 | None | | | |
| CN | 108168811 | A | 15 June 2018 | None | | | |
| CN | 208508933 | U | 15 February 2019 | None | | | |
| EP | 2868548 | A1 | 06 May 2015 | SI | 2868548 | T1 | 31 May 2019 |
| | | | | EP | 2868548 | B1 | 19 December 2018 |
| | | | | ES | 2715330 | T3 | 03 June 2019 |
| | | | | PL | 2868548 | T3 | 28 June 2019 |
| | | | | HRP | 20190357 | T1 | 19 April 2019 |
| EP | 4079594 | A1 | 26 October 2022 | DE | 102021110178 | A1 | 27 October 2022 |

Form PCT/ISA/210 (patent family annex) (July 2022)